(19) Europäisches Patentamt
European Patent Office
Office européen des brevets

(11) **EP 1 913 573 B1**

(12) **FASCICULE DE BREVET EUROPEEN**

(45) Date de publication et mention
de la délivrance du brevet:
**17.01.2018 Bulletin 2018/03**

(21) Numéro de dépôt: **06792758.2**

(22) Date de dépôt: **09.08.2006**

(51) Int Cl.:
***G09G 3/36*** *(2006.01)*

(86) Numéro de dépôt international:
**PCT/EP2006/065184**

(87) Numéro de publication internationale:
**WO 2007/020215 (22.02.2007 Gazette 2007/08)**

(54) **AFFICHEUR MATRICIEL A AFFICHAGE SÉQUENTIEL DES COULEURS ET PROCÉDÉ D'ADRESSAGE**

SEQUENZIELLE FARBMATRIX-ANZEIGE UND ADRESSIERUNGSVERFAHREN

SEQUENTIAL COLOUR MATRIX DISPLAY AND ADDRESSING METHOD

(84) Etats contractants désignés:
**DE FR GB**

(30) Priorité: **12.08.2005 FR 0508543**

(43) Date de publication de la demande:
**23.04.2008 Bulletin 2008/17**

(73) Titulaire: **Thomson Licensing
92130 Issy-les-Moulineaux (FR)**

(72) Inventeurs:
• **LEBRUN, Hugues
F-38500 Coublevie (FR)**
• **KRETZ, Thierry
F-38430 Saint Jean de Moirans (FR)**

(74) Mandataire: **Esselin, Sophie et al
Marks & Clerk France
Conseils en Propriété Industrielle
Immeuble Visium
22 avenue Aristide Briand
94117 Arcueil Cedex (FR)**

(56) Documents cités:
WO-A-02/101708        WO-A2-2004/097506
US-A1- 2003 218 586        US-B1- 6 448 951

EP 1 913 573 B1

**Description**

La présente invention concerne un afficheur matriciel à affichage séquentiel des couleurs. Elle concerne notamment les afficheurs à cristaux liquides LCD (*Liquid Crystal Display*).

Ces afficheurs matriciels sont du type à matrice active. Ils comprennent un élément actif au niveau de chaque pixel, qui est commandé de manière appropriée pour afficher un niveau de gris correspondant à une luminance Rouge, Verte ou Bleue. Contrairement aux afficheurs sur lesquels l'image couleur est formée à l'aide d'une structure à filtres colorés par pixel, les afficheurs séquentiels couleurs utilisent un éclairage séquentiel en rouge, vert et bleu, associé à un procédé d'adressage vidéo utilisant des sous-trames colorées dans chaque trame. Sur chaque trame, on affiche en séquence une image rouge, une image verte puis une image bleue. En d'autres termes dans un mode de fonctionnement classique d'un afficheur, la couleur est formée par modulation spatiale de la lumière alors que dans le mode de fonctionnement à affichage séquentiel de la couleur, celle-ci est restituée par une modulation temporelle de la lumière.

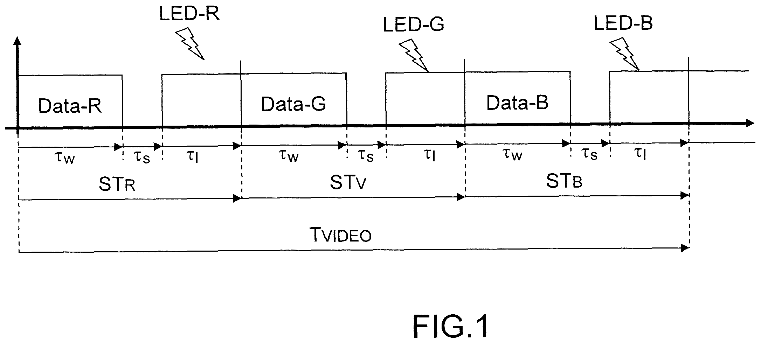

Un procédé d'adressage connu d'un afficheur matriciel monochrome en séquentiel couleur à cristal liquide est illustré sur la figure 1. Une trame image $T_{VIDEO}$ est ainsi constituée de trois sous-trames colorées : une sous-trame rouge STR, une sous-trame verte STG et une sous-trame bleue $ST_B$.

Chaque sous trame comprend trois phases : une phase d'écriture $\tau_w$, pendant laquelle la donnée correspondante à la luminance est appliquée sur chaque élément actif, une phase de stabilisation $\tau_s$ du cristal liquide, puis une phase de rétro-éclairage de l'afficheur $\tau_l$, dans la luminance considérée.

Dans un mode de réalisation du rétro-éclairage de l'afficheur, la boite à lumière comprend des diodes émissives (LEDs) rouge, verte et bleue allumées tour ou tour en séquence.

Dans les rétroprojecteurs ou vidéo projecteurs, le système plus couramment utilisé est la roue à segments colorés disposée entre le plan de l'afficheur LCD et le plan de projection. La lumière de rétro-éclairage est dans ce cas une boite à lumière blanche.

La durée des trois sous-trames colorées doit être inférieure à la durée d'une trame vidéo, typiquement 20 millisecondes pour un fonctionnement à 50 Hz ou 16,7 millisecondes pour un fonctionnement à 60 Hz. La phase d'écriture se réalisant ligne par ligne, une telle solution ne peut être mise en oeuvre qu'avec des afficheurs qui comportent peu de lignes, en sorte que la phase d'écriture $\tau_w$ en séquence de chacune des lignes de l'afficheur puisse se faire, dans chaque sous-trame, en un temps limité de l'ordre de 2 millisecondes.

Si on prend par exemple un afficheur comprenant 200 lignes, on obtient avec les technologies actuelles, les durées suivantes : de l'ordre de 2 millisecondes pour la phase d'écriture $\tau_w$, 1 milliseconde pour la phase de stabilisation $\tau_s$ et 3 millisecondes pour la phase de rétro-éclairage $\tau_e$. Cela fait un total de 18 millisecondes pour chaque trame, ce qui est tout à fait compatible avec la durée d'une trame vidéo, typiquement 20 millisecondes à 50 Hz.

Cela correspond typiquement à des applications utilisant des petits écrans.

Au-delà, il n'est plus possible d'adresser de cette façon l'afficheur avec trois sous-trames colorées par ligne.

Pour des applications utilisant des afficheurs au format VGA (640x480) ou un format plus grand, c'est à dire des afficheurs de 600 lignes et plus, il est donc nécessaire d'envisager une autre solution.

Un problème qui se pose dans l'invention est ainsi de pouvoir adresser des afficheurs couleur de grande complexité en mode séquentiel couleur.

Le brevet US 6,448,951 décrit un afficheur dans lequel trois rangées successives de la matrice peuvent être sélectionnées par une même sortie d'un driver ligne.

L'invention a ainsi pour objet un afficheur matriciel à affichage séquentiel des couleurs et un procédé d'adressage correspondant.

Selon l'invention, on prévoit de répartir les rangées de pixel de l'afficheur en n≥2 groupes de rangées. Il est alors possible d'adresser en parallèle n rangées de pixel de la matrice, soit par le même circuit de commande des lignes de sélection de rangée, soit par des circuits de commande des lignes séparés, mais synchronisés. Dans une variante, on peut prévoir que les circuits de commande des lignes séparés ne sont pas synchrones.

A chaque colonne de pixel, on associe un conducteur colonne par groupe, piloté par le circuit de commande des colonnes (driver colonne) pour y appliquer la donnée vidéo à afficher. Si on a n groupes de rangées, on peut ainsi écrire en même temps tous les pixels de n rangées en parallèle. Au premier ordre, le temps d'écriture d'un afficheur à N rangées, devient celui d'un afficheur à N/n rangées.

Un circuit de commande des lignes de sélection de rangée apte à adresser un afficheur selon l'invention permet la sélection de n rangées de la matrice en parallèle, à chaque phase d'écriture.

Un circuit de commande des colonnes apte à commander l'affichage des données sur un afficheur selon l'invention, est tel qu'il permet d'appliquer des données vidéo sur n conducteurs colonne par colonne de pixel de l'afficheur, de manière à permettre l'écriture dans chaque colonne de pixel de l'afficheur, des pixels appartenant aux n rangées sélectionnées en parallèle.

Dans un mode de réalisation de l'invention, on prévoit pour chaque colonne de pixel de la matrice, autant de conducteurs colonne que de groupes de rangées de pixel.

L'invention concerne donc un afficheur matriciel à affichage séquentiel des couleurs, du type à matrice active, comprenant des pixels arrangés selon N rangées et m colonnes, caractérisé en ce que les N rangées sont réparties en n groupes, avec n égal ou supérieur à 2 et en ce que chaque colonne de pixel comprend n conducteurs colonnes permettant une sélection en écriture des pixels de n rangées en parallèle, une rangée par groupe, les pixels de chacune des n rangées sélectionnées en écriture recevant chacun une donnée correspondante par un conducteur colonne respectif, caractérisé en ce que les n rangées sélectionnées en écriture en parallèle comprennent au moins deux rangées successives de l'afficheur, correspondant l'une à un premier groupe et l'autre à un deuxième groupe, et les deux rangées successives partagent la même ligne de connexion des grilles des pixels dans la matrice, ligne de connexion qui forme la ligne de sélection de rangée pour lesdites deux rangées successives.

Dans un mode de réalisation, n est égal à 2 et l'afficheur comprend un driver colonne qui pilote deux conducteurs colonnes par colonne de pixels, un premier conducteur colonne pour les pixels des rangées du premier groupe et un deuxième conducteur pour les pixels des rangées du deuxième groupe. Dans un autre mode de réalisation, l'afficheur comprend un premier driver colonne pour les pixels de rangées d'une première partie de l'afficheur, et un deuxième driver colonne pour les pixels de rangées d'une deuxième partie de l'afficheur et les n rangées sélectionnées en parallèle comprennent deux rangées successives dans la première partie de l'afficheur, les rangées dans ladite première partie étant réparties en deux groupes de telle sorte que deux rangées successives, appartiennent l'une au premier groupe et l'autre au deuxième groupe, partagent la même ligne de connexion des grilles des pixels qui forme une ligne de sélection simultanée des deux rangées successives, et le premier driver colonne pour les pixels des rangées dans la première partie de l'afficheur pilote deux conducteur colonnes par colonne de pixels, un premier conducteur colonne pour les pixels des rangées du premier groupe et un deuxième conducteur pour les pixels des rangées du deuxième groupe.

Dans la deuxième partie les rangées forment un troisième groupe. Dans une variante, les rangées sont réparties en deux groupes et deux rangées successives appartenant l'une à un troisième groupe et l'autre à un quatrième groupe partagent la même ligne de connexion des grilles des pixels dans la matrice, ligne de connexion qui forme la ligne de sélection de rangée pour lesdites deux rangées successives.

D'autres avantages et caractéristiques de l'invention apparaîtront plus clairement à la lecture de la description qui suit, faite à titre indicatif et non limitatif de l'invention et en référence aux dessins annexés, dans lesquels :

- la figure 1 illustre un mode d'affichage séquentiel couleur d'un afficheur LCD;
- la figure 2 illustre un exemple d'arrangement de lignes d'un afficheur matriciel selon un exemple comparatif relatif à l'invention;

- la figure 3 illustre un dispositif d'adressage correspondant, couplé à un séquençage des couleurs selon un exemple comparatif relatif à l'invention;
- la figure 4 un autre exemple d'arrangement de lignes d'un afficheur matriciel selon un exemple comparatif relatif à l'invention;
- la figure 5 est une variante de l'arrangement de la figure 4, pour n=2 groupes, qui permet une simplification de réalisation de la matrice selon l'invention;
- les figures 6a et 6b illustrent un autre exemple d'arrangement de lignes selon une variante de l'invention;
- la figure 7 est une illustration simplifiée d'un exemple de topologie d'une matrice active d'un afficheur avec un arrangement en bandes selon l'invention;
- les figures 8a et 8b illustrent de façon schématique un autre exemple de topologie, pour un arrangement en bande (figure 8a) ou un arrangement en groupes imbriqués;
- les figures 9a et 9b illustrent une variante de la topologie précédente.

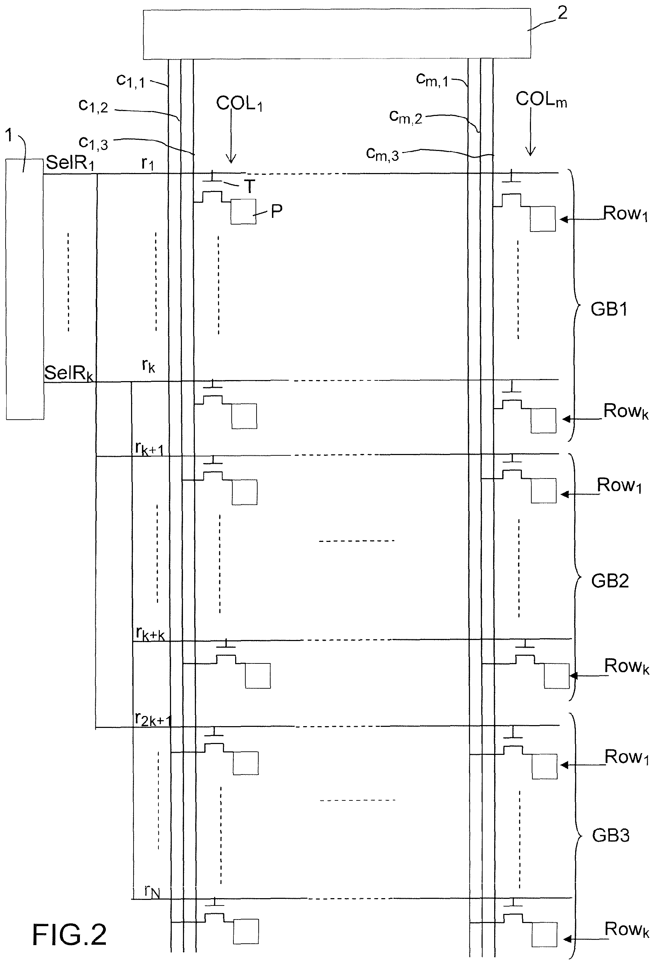

La figure 2 illustre un premier mode de réalisation d'une répartition des N lignes d'un afficheur matriciel en n groupes de N/n rangées selon un exemple comparatif relatif à l'invention. L'afficheur est du type à matrice active : à chaque pixel P est associé un élément de commutation, typiquement un transistor T. Le transistor permet de charger le pixel P à une tension représentative d'un niveau de gris à afficher. Les grilles des transistors d'une même rangée sont en pratique toutes connectées à la même ligne conductrice de la matrice active, sur laquelle le driver ligne applique un signal de sélection de rangée.

La notion de rangée de pixels correspond à l'aspect arrangement matriciel des pixels. La notion de ligne conductrice ou de ligne de sélection de rangée correspond à l'aspect conduction/commande électrique. En général, cette ligne et les grilles sont réalisées sur la matrice active par un même niveau conducteur.

Le transistor T est rendu actif par application d'un signal de sélection sur la ligne correspondante de la matrice, par exemple $r_1$, et application sur un conducteur colonne associé, $c_{1,3}$ sur la figure 2, de la tension à charger sur le pixel.

Les lignes sont activées séquentiellement par un circuit 1 de commande des lignes, communément appelé "driver ligne", et les tensions sont appliquées sur les colonnes par un circuit 2 de commande des colonnes, communément appelé "driver colonne". Selon un exemple comparatif relatif à l'invention, les lignes sont regroupées en n groupes de rangées.

Dans le mode de réalisation représenté sur la figure 2, chaque groupe comprend N/n rangées consécutives de la matrice, en sorte que chaque groupe représente une bande de largeur N/n pixels sur l'afficheur.

On note

$$k=N/n$$

Dans l'exemple n=3 (et donc N=3k). On a ainsi 3 groupes de rangées GB1, GB2, GB3, qui comprennent chacun k rangées consécutives $Row_1$, ...$Row_k$ de rang 1 à k. L'afficheur comprend N lignes de sélection $r_1$ à $r_N$. Dans l'exemple, les rangées du groupe GB1 sont sélectionnées par les lignes $r_1$ à $r_k$, celles du groupe GB2 sont sélectionnées par les lignes $r_{k+1}$ à $r_{k+k}$, et celles du groupe GB3 sont sélectionnées par les lignes $r_{2k+1}$ à $r_N$.

Les rangées de même rang i parmi k sont activées au même instant par leur signal de sélection:

- soit leurs lignes de sélection sont électriquement reliées comme représenté, pour recevoir le même signal de sélection : par exemple les lignes de sélection $r_1$, $r_{k+1}$, et $r_{2k+1}$ des rangées $Row_1$ des groupes GB1, GB2 et GB3 sont ainsi électriquement reliées à la même sortie $Selr_1$ du driver ligne 1. Ce dernier délivre alors k sorties de signal de sélection $SelR_1$ à $SelR_k$. Chaque sortie pilote ainsi n=3 lignes, soit en pratique 3 rangées de grilles de transistors.
- soit leurs lignes de sélection sont activées en même temps, par un moyen approprié (par exemple trois drivers ligne synchrones, à k sorties, un driver par groupe).

Pour chaque colonne de pixels P de l'afficheur, on a un conducteur colonne par groupe de k lignes. Dans l'exemple, avec n=3, on a pour la colonne $COL_1$, trois conducteurs colonnes $c_{1,1}$, $c_{1,2}$, $c_{1,3}$, pour commander les pixels de la colonne $COL_1$ appartenant respectivement aux groupes GB1, GB2, GB3. De même, pour la dernière colonne $COL_m$ de l'afficheur, on a trois conducteurs colonnes $c_{m,1}$, $c_{m,2}$, $c_{m,3}$.

Tous ces conducteurs colonnes sont pilotés par le circuit 2 de commande des colonnes, qui reçoit les données de l'image à afficher.

Un mode d'adressage d'un tel afficheur peut ainsi être le suivant, en se plaçant dans le cas illustré sur la figure 2, d'un unique circuit 1 de commande des lignes, fournissant k sorties pour commander les N lignes de sélection $r_1$ à $r_N$ de l'afficheur:

Le circuit 1 de commande des lignes active un signal de sélection de rangée parmi k à chaque temps ligne. Typiquement, il active le signal de sélection $SelR_1$, puis le deuxième,....jusqu'au kième.

A chaque temps ligne, le circuit de commande des colonnes pilote les n=3 fois m conducteurs colonnes, pour appliquer les données vidéo sur chacun des n=3 fois m pixels sélectionnés.

Dans ce mode d'adressage, les données vidéo affichées sur les pixels sélectionnés correspondent aux données de la sous-trame colorée courante.

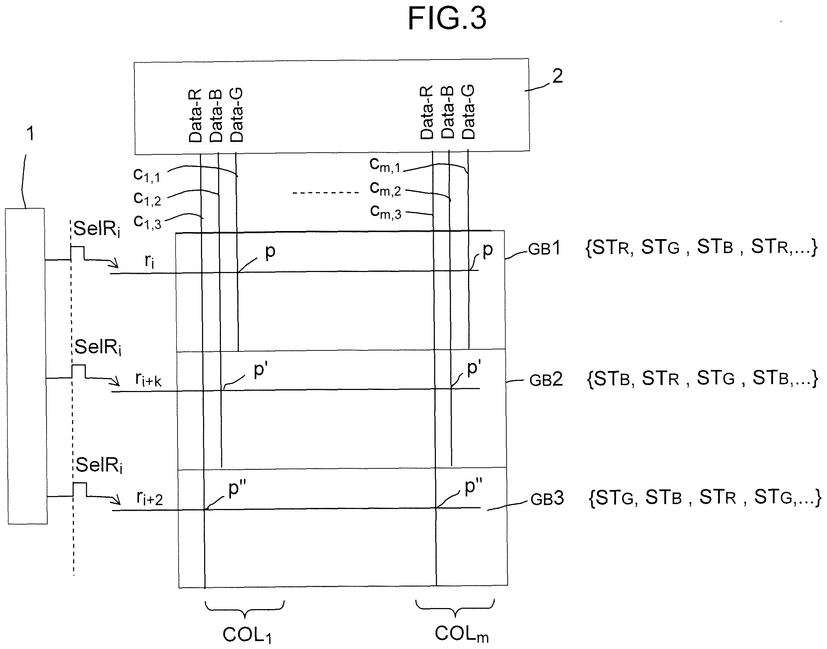

Dans une variante d'adressage représentée sur la figure 3, les données affichées n'appartiennent pas à la même sous-trame d'un groupe de rangées à l'autre. Un tel mode d'adressage est rendu possible avec une répartition des rangées en bandes. En effet, chaque bande ou groupe GB1, GB2, GB3 a alors la même largeur, typiquement une largeur égale à k=N/n pixels, ce qui correspond typiquement à la largeur d'un petit afficheur.

Il est possible de concevoir une boite à lumière de rétro-éclairage de l'afficheur telle qu'elle comporte n=3 sous-ensembles de diodes pilotées selon des séquences différentes, chaque sous-ensemble de diodes étant conçu pour éclairer une bande de l'afficheur.

Par exemple, un premier sous-ensemble de diodes est associé à la première bande GB1, pour éclairer les pixels p de cette bande, selon une première séquence : rouge, vert, bleu, rouge, vert ....

Un deuxième sous-ensemble de diodes est associé à la deuxième bande GB2 pour éclairer les pixels p' de cette bande selon une deuxième séquence : bleu, rouge, vert, bleu, rouge, vert....

Un troisième sous-ensemble de diodes est associé à la troisième bande GB3 pour éclairer les pixels p" de cette bande selon une troisième séquence vert, bleu, rouge, vert, bleu, rouge ....

Ces séquences d'éclairage se déroulent en parallèle, de façon synchrone.

Avec un tel éclairage différent par bande, le driver colonne doit appliquer sur chaque conducteur colonne d'une colonne de pixels, des données correspondant à une sous-trame spécifique qui varie d'un conducteur colonne à l'autre. Si on reprend les séquences d'éclairage données en exemple précédemment, et comme illustré sur la figure 3, si on en est au premier élément de la séquence, les données appliquées sur le conducteur colonne correspondant à la première bande GB1 sont les données Data-R de la sous-trame rouge, les données appliquées sur le conducteur colonne correspondant à la deuxième bande GB2 sont les données Data-B de la sous-trame bleue, et les données appliquées sur le conducteur colonne correspondant à la troisième bande GB3 sont les données Data-G de la sous-trame verte.

En pratique, on peut piloter les rangées des n bandes par le circuit 1 de commande des lignes pour les trois bandes comme illustré et expliqué en relation avec la figure 2. On peut aussi prévoir un circuit driver ligne par bande. On a alors n circuits drivers lignes, qui peuvent être intégrés ou externes à l'afficheur, et qui sont commandés de façon synchrone.

Le driver colonne est piloté de manière à pouvoir traiter les données des trois sous-trames en parallèle. Pour un afficheur comprenant m colonnes de pixels, Il doit ainsi être apte à piloter n=3 fois m conducteurs colonnes. Pour la mise en oeuvre du mode d'adressage tel qu'illustré sur la figure 3, il doit en outre être apte à traiter en parallèle des sous-trames colorées différentes, 1 par bande. Il peut comprendre un ou des circuits drivers colonnes qui sont alors pilotés de façon synchrone. Il peut être du type intégré ou externe à l'afficheur.

Dans une variante, on peut prévoir n circuits driver ligne, un circuit driver ligne par bande, qui peuvent être intégrés ou externes à l'afficheur, et qui sont commandés de façon non synchrone. Cela rend possible un adressage des n bandes de façon désynchronisée, c'est à dire que l'on peut adresser ainsi n rangées en parallèle, 1 rangée par bande, mais de façon non synchrone. Une telle variante permet avantageusement d'éviter une rupture d'éclairage simultanée sur les n bandes. Dans ce cas, il faut aussi prévoir que les sorties du circuit 2 de commande des colonnes ne soient pas toutes latchées en même temps, mais latchées relativement à leur bande respective, et prévoir des séquences d'éclairage pilotées de façon adaptée.

Le mode de regroupement en n bandes vient d'être expliqué (et illustré) dans un exemple où n=3. Mais il s'applique de façon générale avec n supérieur ou égal à 2. Dans tous les cas chacun des n groupes GB1 à GBn de l'écran reçoit les 3 couleurs. Le nombre n de groupes est défini en pratique par le temps minimum de rafraîchissement de la matrice active ainsi que par le temps nécessaire à la stabilisation du cristal liquide.

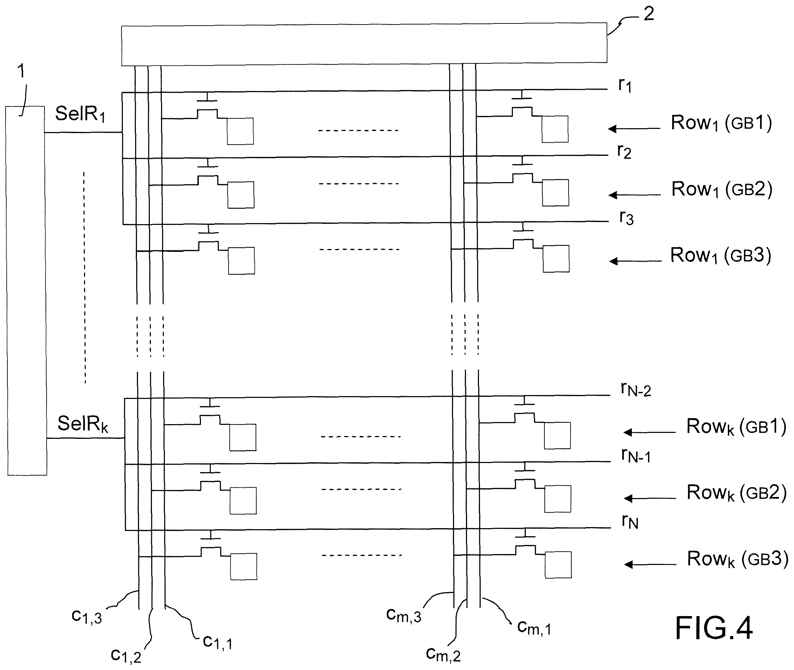

Un autre mode de réalisation de groupes de rangées de pixel est illustré sur la figure 4.

Les n groupes de rangées GB1, GB2, GB3 comprennent chacun k=N/n rangées de rang 1 à k. Ils sont formés en sorte que les n rangées sélectionnées en même temps par la même sortie du driver ligne 1 sont n rangées successives de la matrice. Les groupes de rangées sont alors imbriqués. Dans l'exemple, les rangées de pixels successives sont sélectionnées par le même signal de sélection de ligne $SelR_1$. La première rangée est la rangée de rang 1 $Row_1(GB1)$ du groupe GB1, associée à la ligne de sélection $r_1$ de l'afficheur ; la deuxième rangée est la rangée de rang 1 $Row_1(GB2)$ du groupe GB2, associée à la ligne de sélection $r_2$ de l'afficheur ; la troisième rangée est la rangée de rang 1 $Row_1(GB3)$ du groupe GB3, associée à la ligne de sélection $r_3$ de l'afficheur. Ces trois rangées $Row_1(GB1)$, $Row_1(GB2)$ et $Row_1(GB3)$ sont sélectionnées simultanément, dans l'exemple par le signal de sélection $SelR_1$ fourni par le driver ligne 1 et appliqué sur les trois lignes de sélection $r_1$, $r_2$, $r_3$.

Un tel mode de réalisation est plus particulièrement avantageux lorsque l'on répartit les N rangées de l'afficheur en deux groupes GB1 et GB2. En effet, dans ce cas, on peut concevoir le dessin de la matrice active de telle sorte que la même ligne de sélection de rangée soit physiquement commune à deux rangées de pixels successives.

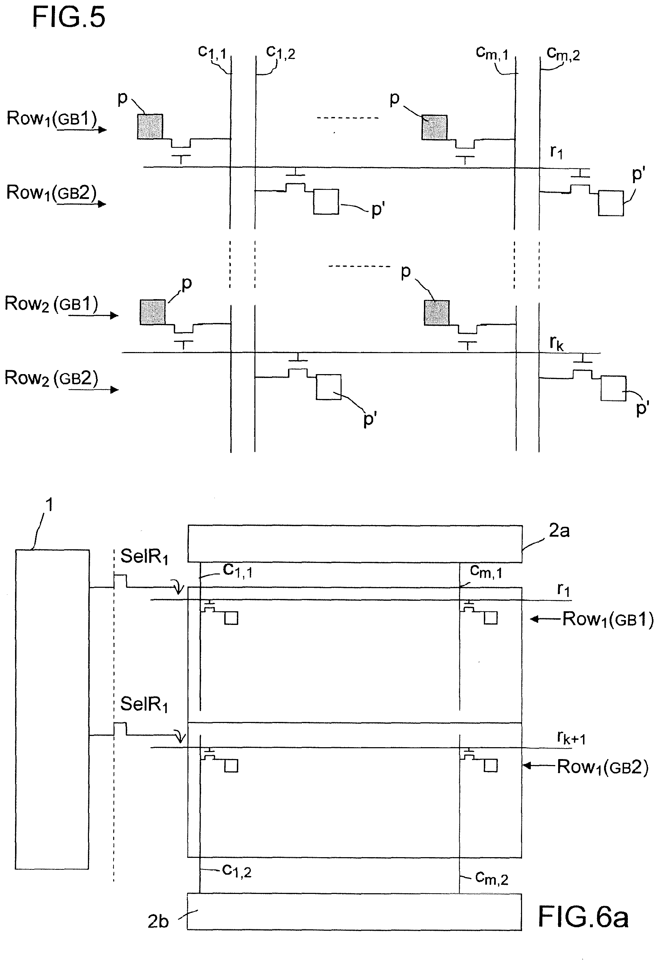

Un arrangement correspondant est illustré sur la figure 5.

Deux rangées successives de l'afficheur, appartiennent l'une au groupe GB1 et l'autre au groupe GB2. Elles ont en commun la même ligne de sélection de rangée. Par exemple $r_1$ est commune à $Row_1(GB1)$ et $Row_1(GB2)$. A chacune de ces deux rangées correspond un conducteur colonne respectif, $c_{1,1}$ pour le pixel à l'intersection de $Row_1(GB1)$ et de $COL_1$ et $c_{1,2}$ pour le pixel à l'intersection de $Row_1(GB2)$ et de $COL_1$.

Si on note respectivement p et p' les pixels du groupe GB1 et GB2, chaque transistor de pixel p du premier groupe est disposé dans l'angle supérieur gauche formé par les deux conducteurs colonnes et la ligne de sélection ; chaque pixel p' du deuxième groupe est disposé dans l'angle inférieur gauche formé par les deux conducteurs colonnes et la ligne de sélection.

De cette façon, en réduisant le nombre de lignes de sélection, on réduit le nombre de croisement lignes/colonnes sur la matrice active. On réduit donc le risque de court-circuits ligne/colonne. Le rendement de fabrication s'en trouve amélioré.

En outre, des arrangements tels qu'illustrés sur les figures 4 et 5 permettent avec un dessin simple d'avoir une seule sortie de driver ligne pour plusieurs lignes synchrones, alors qu'une structure telle qu'illustrée à la figure 2, dans laquelle 3 lignes synchrones sont pilotées avec une seule sortie de driver ligne, induit en pratique beaucoup de croisements et consomme beaucoup d'espace en périphérie.

Dans une autre variante de réalisation illustrée sur la figure 6a, applicable notamment lorsque l'on répartit les rangées de pixels de l'afficheur en n=2 groupes, on utilise un driver colonne haut et un driver colonne bas : on adresse une moitié de l'afficheur par le haut et l'autre par le bas. De cette façon, les deux conducteurs colonnes de chaque colonne de pixel sont dans le prolongement l'un de l'autre, l'un étant sur la partie haute et l'autre sur la partie basse : ils ne sont plus en parallèle. On améliore de façon significative la fiabilité de fabrication d'une telle matrice en réduisant les risques de court-circuit entre les conducteurs colonne. On n'a alors physiquement sur la matrice active qu'un seul conducteur colonne au regard de chaque rangée par colonne de pixel, au lieu de n conducteurs en parallèle : La surface utile (Open aperture Ratio) n'est pas dégradée par rapport à un afficheur selon la figure 5 la surface d'une structure à 2 colonnes par pixel réduit significativement la surface utile du pixel (typiquement de l'ordre 5% à 10% de surface utile en moins sur la structure de la figure 5 par rapport à la figure 6a pour un pixel de 300$\mu$m).

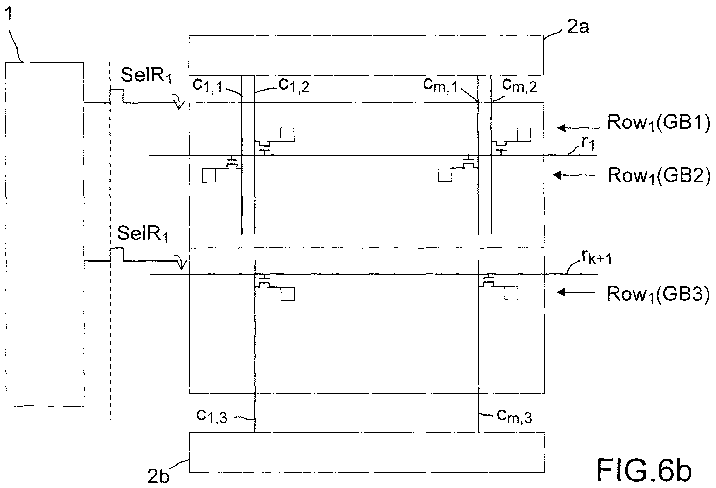

On peut combiner cette variante avec celle décrite en relation avec la figure 5. C'est ce qui est illustré sur la figure 6b : dans ce cas, on a n=3 groupes. Dans une partie haute de l'afficheur, les rangées sont réparties en deux groupes, deux rangées successives appartenant à deux groupes distincts et partageant la même ligne de sélection de rangée. On a trois conducteurs colonnes par colonne de pixel : deux conducteurs colonne en parallèle sur la partie haute, pour chaque colonne de pixels, par exemple les conducteurs $c_{1,1}$ et $c_{1,2}$ pour la colonne $COL_1$. Ces conducteurs colonnes sont commandés par un driver colonne 2a, en partie supérieure de l'afficheur.

Les rangées en partie basse de l'afficheur forment le troisième groupe GB3. Dans cette partie on a le troisième conducteur colonne, par exemple le conducteur $c_{1,3}$ de la colonne $COL_1$. Ces conducteurs colonnes sont commandés par un driver colonne 2b en partie inférieure de l'afficheur.

D'autres combinaisons sont possibles, au gré des besoins et des performances attendues. Notamment on peut avoir en partie basse le même arrangement qu'en partie haute : on a alors quatre groupes de rangées, deux en partie haute, commandés par le driver colonne 2a et deux en partie basse commandés par le driver colonne 2b.

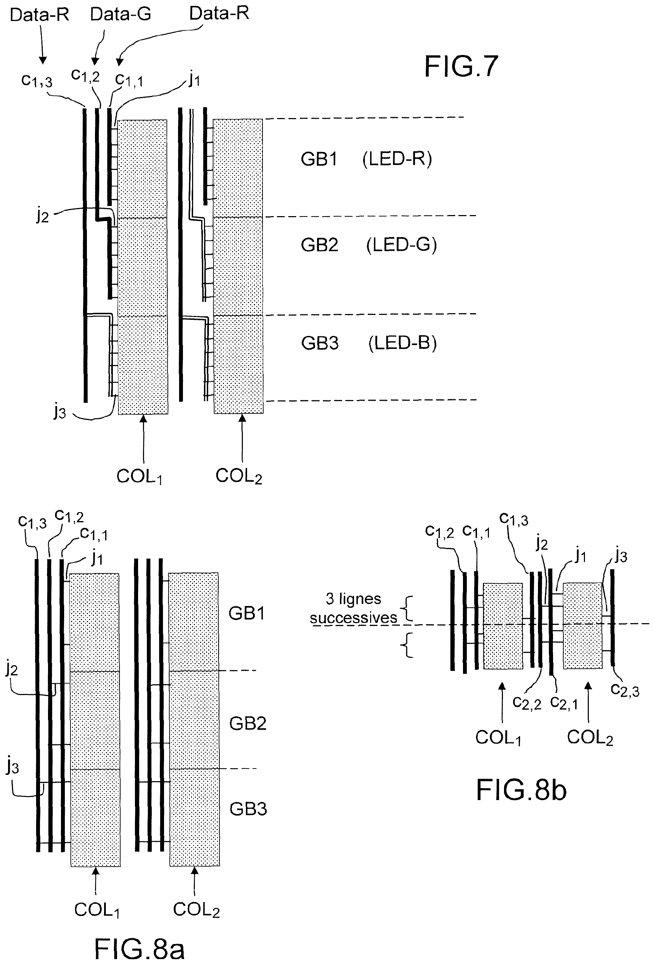

Les figures 7, 8a et 8b, 9a et 9b, illustrent de façon schématique comment on peut réaliser une topologie correspondante de matrice active, et notamment, le dessin des conducteurs colonnes et leurs contacts avec les transistors.

La figure 7 illustre un mode de réalisation possible sur une matrice active, des n conducteurs colonnes par colonne de pixel, dans un arrangement en n bandes selon l'invention. Dans l'exemple n=3. On a donc trois bandes GB1, GB2, GB3. Ces bandes peuvent être éclairées selon des séquences colorées distinctes. Dans l'exemple, pour une sous-trame donnée, la bande GB1 est éclairée en rouge (LED-R), et ses pixels reçoivent les données Data-R de la sous-trame rouge, la bande GB2 est éclairée en vert (LED-G), et ses pixels reçoivent les données Data-G de la sous-trame verte, et la bande GB3 est éclairée en bleue (LED-B), et ses pixels reçoivent les données Data-B de la sous-trame bleue.

Pour simplifier, les lignes de sélection ne sont pas représentées.

Pour appliquer les données vidéo des sous trames considérées sur les pixels des différentes n bandes selon l'invention, on dispose de n conducteurs colonnes par colonne de pixel.

Dans l'exemple illustré sur la figure 7, on dispose ainsi pour la colonne de pixel $COL_1$, de n=3 conducteurs colonnes $c_{1,1}$, $c_{1,2}$, $c_{1,3}$.

Si l'afficheur comprend m colonnes de pixels, le driver colonne doit ainsi piloter n=3 fois m conducteurs colonnes. On notera que la notion de "driver colonne" couvre la fonction de pilotage des conducteurs colonnes, pour y afficher les données vidéo selon la séquence d'adressage, indépendamment de sa constitution matérielle. On notera à cet égard que le driver colonne peut être du type intégré, ou externe à l'afficheur. Il peut comprendre en pratique un ou plusieurs circuits commandés de façon synchrone.

Considérons la colonne $COL_1$. Les conducteurs colonne $c_{1,1}$, $c_{1,2}$, $c_{1,3}$ sont connectés respectivement le premier aux pixels (et plus précisément à leurs transistors) des rangées de la première bande GB1, le deuxième aux pixels des rangées de la deuxième bande GB2 et le troisième aux pixels des rangées de la troisième bande GB3. Le dessin des conducteurs colonnes est tel que chaque conducteur colonne associé à une bande ne se prolonge pas au-delà de cette bande. On réduit le nombre de croisements avec les lignes et les colonnes ainsi que la longueur de conducteur en vis à vis, ce qui permet de réduire les risques de court-circuit.

De manière plus détaillée, ce dessin est tel que sur la première bande GB1 on a n=3 conducteurs colonne $c_{1,1}$, $c_{1,2}$, $c_{1,3}$ en parallèle pour chaque colonne de pixel. Sur la deuxième bande, on a n-1=2 conducteurs colonne $c_{1,2}$, $c_{1,3}$. Le dessin du conducteur $c_{1,2}$ sur la deuxième bande est tel que ce conducteur est placé dans le prolongement de l'axe du conducteur $c_{1,1}$. De cette manière, les pixels dans la bande GB2 voient sensiblement la même capacité de couplage avec le conducteur colonne que ceux de la bande GB1. Sur la troisième bande, on a n-2=1 conducteur colonne $c_{1,3}$. Le dessin du conducteur $c_{1,3}$ est tel qu'une branche de ce conducteur est placée dans le prolongement de l'axe du conducteur $c_{1,1}$. De cette manière, les pixels dans la bande GB3 voient une capacité de couplage avec le conducteur colonne la plus proche possible de celle que voient les pixels des bandes GB1 et GB2.

Une telle mise en oeuvre permet d'offrir un compromis entre la réduction des risques de court-circuit entre les conducteurs colonnes dans la réalisation des connexions avec les pixels, et une uniformisation des capacités de couplage entre les différentes bandes, en sorte d'assurer un comportement en affichage le plus uniforme possible sur l'afficheur.

Une autre mise en oeuvre est illustrée sur la figure 8a. Si on prend la colonne $COL_1$, cette mise en oeuvre est telle que les trois conducteurs colonnes $c_{1,1}$, $c_{1,2}$, $c_{1,3}$ de cette colonne sont disposés en parallèle sur toute la hauteur de l'afficheur : ils sont présents sur toutes les bandes. On est sûr d'avoir une uniformité du couplage pixel-colonne sur tout l'afficheur. Mais en contre-partie, ceci a un impact sur le rendement de fabrication des matrices actives, car le risque de court-circuit entre les colonnes est augmenté. Sur la figure 8a, les connexions respectives $j_1$, $j_2$, $j_3$ entre les conducteurs colonnes $c_{1,1}$, $c_{1,2}$, $c_{1,3}$, et les pixels se font toutes du même côté, dans l'exemple illustré, à gauche. Dans la première bande, on a les connexions $j_1$, dans la deuxième bande, on a les connexions $j_2$ et dans la troisième bande, on a les connexions $j_3$.

Cette mise en oeuvre s'applique aussi dans le cas où les groupes de rangées selon l'invention sont imbriqués. En effet, dans cette variante de groupement selon l'invention, on prévoit que le même signal de sélection commande n rangées successives de l'afficheur. Dans le cas où n=3, on a trois rangées de pixels successives commandées par le même signal de sélection de ligne. Si on considère la colonne de pixel $COL_1$, le pixel correspondant à la première ligne est connecté par la connexion $j_1$ au premier conducteur colonne $c_{1,1}$. Le pixel correspondant à la deuxième ligne est connecté par la connexion $j_2$ au deuxième conducteur colonne $c_{1,2}$. Le pixel correspondant à la troisième ligne est connecté par la connexion $j_3$ au troisième conducteur colonne $c_{1,3}$. Dans l'exemple, les connexions d'un pixel au conducteur colonne correspondant se font toutes du même côté, dans l'exemple par la gauche.

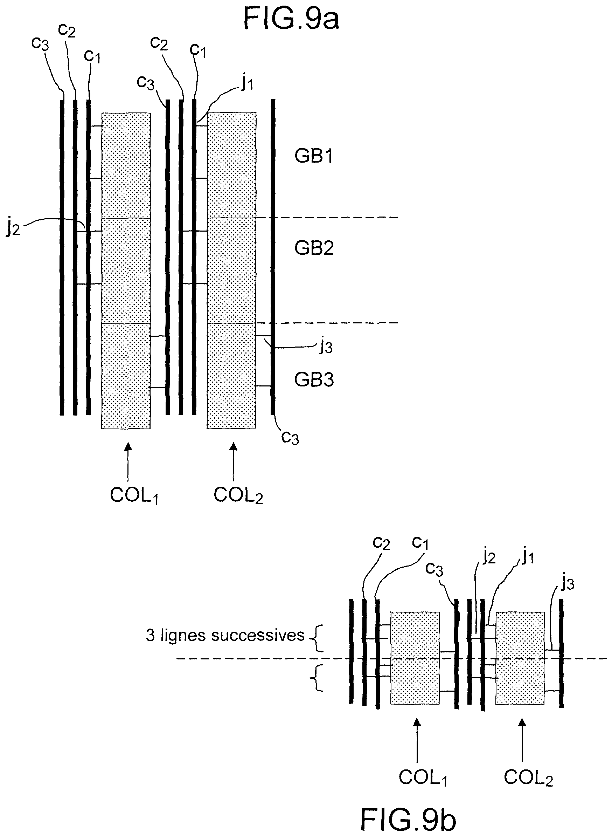

Les figures 9a et 9b illustrent une variante des figures 8a et 8b dans laquelle on connecte les pixels tantôt par la droite, tantôt par la gauche, le conducteur colonne correspondant se trouvant alors soit à droite, soit à gauche.

Dans l'exemple illustré sur la figure 9a, correspondant à un arrangement en bandes selon l'invention avec n=3, les pixels des bandes GB1 et GB2 sont connectés par la gauche et ceux de la bande GB3 sont connectés par la droite.

Dans l'exemple illustré sur la figure 9b, correspondant à une répartition des rangées en groupes imbriqués, les pixels de deux rangées successives sont connectés par la gauche et les pixels de la troisième rangée sont connectés par la droite. Si on considère la colonne de pixel $COL_1$, les pixels de la première et deuxième rangées sont connectées par la gauche à leur conducteur colonne respectif, $c_{1,1}$, $c_{1,2}$. Le pixel de la troisième rangée est connecté par la droite au conducteur colonne correspondant $c_{1,3}$, disposé à droite de la colonne de pixel.

Cette variante est notamment applicable à un arrangement à deux groupes selon l'invention, avec deux conducteurs colonne par colonne de pixel et une ligne de sélection commune à deux rangées de pixel successives comme illustré sur la figure 5 déjà décrite.

Elle s'applique aussi à un arrangement en groupes de rangées imbriquées, ou un arrangement en bandes selon l'invention.

Une telle mise en oeuvre permet de réduire les croisements avec les colonnes, et donc les risques de court-circuit. En contre-partie, elle est délicate de conception pour maintenir sensiblement le même taux d'ouverture partout, ce qui est dû aux différences des dessins pour les pixels connectés par la gauche et ceux connectés par la droite.

## Revendications

**1.** Afficheur matriciel à affichage séquentiel des couleurs, du type à matrice active, comprenant des pixels arrangés selon N rangées et m colonnes, dans lequel les N rangées sont réparties en n groupes (GB1, GB2, GB3) avec n égal ou supérieur à 2 et chaque colonne de pixel ($COL_1$) comprend n conducteurs colonnes ($c_{1,1}$, $c_{1,2}$, $c_{1,3}$) permettant une sélection en écriture des pixels de n rangées en parallèle, une rangée par groupe, les pixels de chacune des n rangées sélectionnées en écriture recevant chacun une donnée correspondante par un conducteur colonne respectif, **caractérisé en ce que** les n rangées sélectionnées en écriture en parallèle comprennent au moins deux rangées successives de l'afficheur, correspondant l'une à un premier groupe (GB1) et l'autre à un deuxième groupe (GB2), et les deux rangées successives ($Row_1(GB1)$, $Row_1(GB2)$) partagent la même ligne de connexion ($r_1$) des grilles des pixels dans la matrice, ligne de connexion qui forme la ligne de sélection de rangée pour lesdites deux rangées successives.

**2.** Afficheur matriciel selon la revendication 1, **caractérisé en ce que** n est égal à 2 et l'afficheur comprend un driver colonne (2) qui pilote deux conducteurs colonnes par colonne de pixels, un premier conducteur colonne ($c_{1,1}$, ...$c_{m,1}$) pour les pixels (p) des rangées du premier groupe (GB1) et un deuxième conducteur ($c_{1,2}$, ...$c_{m,2}$) pour les pixels (p') des rangées du deuxième groupe (GB2).

**3.** Afficheur matriciel selon la revendication 1, comprenant un premier driver colonne pour les pixels de rangées d'une première partie de l'afficheur, et un deuxième driver colonne pour les pixels de rangées d'une deuxième partie de l'afficheur, où les n rangées sélectionnées en parallèle comprennent deux rangées successives dans la première partie de l'afficheur, les rangées dans ladite première partie étant réparties en deux groupes de telle sorte que deux rangées successives ($Row_1(GB1)$, $Row_1(GB2)$) appartiennent l'une au premier groupe (GB1) et l'autre au deuxième groupe (GB2), partagent la même ligne de connexion ($r_1$) des grilles des pixels qui forme la ligne de sélection de rangée pour lesdites deux rangées successives, et le premier driver colonne (2a) pour les pixels des rangées dans la première partie de l'afficheur pilote deux conducteurs colonnes par colonne de pixels, un premier conducteur colonne ($c_{1,1}$, ...$c_{m,1}$) pour les pixels (p) des rangées du premier groupe et un deuxième conducteur ($c_{1,2}$, ...$c_{m,2}$) pour les pixels (p') des rangées du deuxième groupe.

**4.** Afficheur matriciel selon la revendication 3, où les n rangées sélectionnées en parallèle comprennent en outre une rangée dans la deuxième partie de l'afficheur, les rangées dans ladite deuxième partie de l'afficheur formant un troisième groupe (GB3), et le deuxième driver colonne (2b) pour les pixels des rangées dans la deuxième partie de l'afficheur pilote un conducteur colonne ($c_{1,3}$, ...$c_{m,3}$) par colonne de pixels.

**5.** Afficheur selon la revendication 3, où les n rangées sélectionnées en parallèle comprennent en outre deux rangées successives dans la deuxième partie de l'afficheur, et les rangées dans ladite deuxième partie sont réparties en deux groupes de telle sorte que deux rangées successives appartiennent l'une à un troisième groupe, l'autre à un quatrième groupe, partagent la même ligne de connexion des grilles des pixels qui forme la ligne de sélection de rangée pour lesdites deux rangées successives, et le deuxième driver colonne (2b) qui commande les pixels des rangées dans la deuxième partie de l'afficheur pilote deux conducteurs colonnes par colonne de pixels, un conducteur colonne par groupe.

6. Afficheur selon la revendication 5, dans lequel les deux conducteurs colonnes pilotés par le deuxième driver dans la deuxième partie sont disposés dans le prolongement des deux conducteurs colonnes pilotés par le premier driver colonne dans la première partie.

**Patentansprüche**

1. Matrixanzeigegerät für die sequentielle Farbanzeige von der Art mit aktiver Matrix mit in N Zeilen und m Spalten angeordneten Pixeln, bei dem die N Zeilen in n Gruppen (GB1, GB2, GB3) mit n gleich oder größer als 2 verteilt sind und jede Pixelspalte ($COL_1$) n Spaltenleiter ($c_{1,1}$, $c_{1,2}$, $c_{1,3}$) aufweist, die eine Schreibwahl der Pixel aus n Zeilen gleichzeitig ermöglicht, und zwar eine Zeile je Gruppe, wobei die Pixel jeder der n schreibgewählten Zeilen je ein entsprechendes Datum über einen jeweiligen Spaltenleiter erhalten, **dadurch gekennzeichnet, dass** die n gleichzeitig schreibgewählten Zeilen mindestens zwei aufeinanderfolgende Zeilen des Anzeigegeräts umfassen, wobei die eine einer ersten Gruppe (GB1) entspricht et die andere einer zweiten Gruppe (GB2) entspricht, und die zwei aufeinanderfolgenden Zeilen ($Row_1(GB1)$, $Row_1(GB2)$) dieselbe Verbindungslinie ($r_1$) der Pixelgitter in der Matrix teilen, welche Verbindungslinie die Zeilenauswahllinie für die zwei aufeinanderfolgenden Zeilen bildet.

2. Matrixanzeigegerät nach Anspruch 1, **dadurch gekennzeichnet, dass** n gleich 2 ist und das Anzeigegerät einen Spaltentreiber (2) aufweist, der zwei Spaltenleiter je Pixelspalte steuert, und zwar einen ersten Spaltenleiter ($c_{1,1}$, ... $c_{m,1}$) für die Pixel (p) der Zeilen der ersten Gruppe (GB1) und einen zweiten Leiter ($c_{1,2}$, ... $c_{m,2}$) für die Pixel (p') der Zeilen der zweiten Gruppe (GB2).

3. Matrixanzeigegerät nach Anspruch 1, umfassend einen ersten Spaltentreiber für die Zeilenpixel eines ersten Teils des Anzeigegeräts und einen zweiten Spaltentreiber für die Zeilenpixel eines zweiten Teils des Anzeigegeräts, bei dem die n gleichzeitig gewählten Zeilen zwei aufeinanderfolgende Zeilen in dem ersten Teil des Anzeigegeräts umfassen, wobei die Zeilen in dem ersten Teil in zwei Gruppen verteilt sind, so dass zwei aufeinanderfolgende Zeilen ($Row_1(GB1)$, $Row_1(GB2)$) der ersten Gruppe (GB1) bzw. der zweiten Gruppe (GB2) angehören und dieselbe Verbindungslinie ($r_1$) der Pixelgitter teilen, welche die Zeilenauswahllinie für die zwei aufeinanderfolgenden Zeilen bildet, und der erste Spaltentreiber (2a) für die Zeilenpixel in dem ersten Teil des Anzeigegeräts zwei Spaltenleiter je Pixelspalte steuert, und zwar einen ersten Spaltenleiter ($c_{1,1}$, ... $c_{m,1}$) für die Pixel (p) der Zeilen der ersten Gruppe et einen zweiten Leiter ($c_{1,2}$, ... $c_{m,2}$) für die Pixel (p') der Zeilen der zweiten Gruppe.

4. Matrixanzeigegerät nach Anspruch 3, bei dem die n gleichzeitig gewählten Zeilen ferner eine Zeile in dem zweiten Teil des Anzeigegeräts umfassen, wobei die Zeilen in dem zweiten Teil des Anzeigegeräts eine dritte Gruppe (GB3) bilden, und der zweite Spaltentreiber (2b) für die Zeilenpixel in dem zweiten Teil des Anzeigegeräts einen Spaltenleiter ($c_{1,3}$, ... $c_{m,3}$) je Pixelspalte steuert.

5. Anzeigegerät nach Anspruch 3, bei dem die n gleichzeitig gewählten Zeilen ferner zwei aufeinanderfolgende Zeilen in dem zweiten Teil des Anzeigegeräts umfassen und die Zeilen in dem zweiten Teil in zwei Gruppen verteilt sind, so dass zwei aufeinanderfolgende Zeilen einer dritten Gruppe bzw. einer vierten Gruppe angehören und dieselbe Verbindungslinie der Pixelgitter teilen, welche die Zeilenauswahllinie für die zwei aufeinanderfolgenden Zeilen bildet, und der zweite Spaltentreiber (2b), der die Zeilenpixel in dem zweiten Teil des Anzeigegeräts steuert, zwei Spaltenleiter je Pixelspalte, einen Spaltenleiter je Gruppe, steuert.

6. Anzeigegerät nach Anspruch 5, bei dem die zwei von dem zweiten Treiber in dem zweiten Teil gesteuerten Spaltenleiter in der Verlängerung der zwei von dem ersten Spaltentreiber in dem ersten Teil gesteuerten Spaltenleiter angeordnet sind.

**Claims**

1. Matrix display with sequential display of colours, of the active matrix type, comprising pixels arranged according to N rows and m columns, wherein the N rows are distributed into n groups (GB1, GB2, GB3) with n equal to or greater than 2 and each pixel column ($COL_1$) comprises n column conductors ($c_{1,1}$, $c_{1,2}$, $C_{1,3}$) enabling a write selection of the pixels of n rows in parallel, one row per group, the pixels of each one of the n write selected rows each receiving a corresponding data item by a respective column conductor, **characterised in that** the n write selected rows in parallel comprise at least two successive rows of the display, corresponding the one to a first group (GB1) and the other to a second group (GB2), and both successive rows ($Row_1(GB1)$, $Row_1(GB2)$) share the same connection line (r-t) of the grids of the pixels in the matrix, connection line that forms the row selection line for said two successive rows.

**2.** Matrix display according to claim 1, **characterised in that** n is equal to 2 and the display comprises a column driver (2) that controls two column conductors per pixel column, a first column conductor ($c_{1,1}, ...cm_{,1}$) for the pixels (p) of the rows of the first group (GB1) and a second column conductor ($c_{1,2}, ...c_{m,2}$) for the pixels (p') of the rows of the second group (GB2).

**3.** Matrix display according to claim 1, comprising a first column driver for the pixels of rows of a first part of the display, and a second column driver for the pixels of rows of a second part of the display, where the n rows selected in parallel comprise two successive rows in the first part of the display, the rows in said first part being distributed into two groups such that two successive rows ($Row_1$ (GB1),$Row_1$(GB2)) belong the one to the first group (GB1) and the other to the second group (GB2), sharing the same connection line ($r_1$) of the grids of the pixels that form the row selection line for said two successive rows, and the first column driver (2a) for the pixels of the rows in the first part of the display controls two column conductors per pixel column, a first column conductor ($c_{1,1}, ...cm_{,1}$) for the pixels (p) of the rows of the first group and a second conductor ($c_{1,2}, ...c_{m,2}$) for the pixels (p') of the rows of the second group.

**4.** Matrix display according to claim 3, where the n rows selected in parallel further comprise a row in the second part of the display, the rows in said second part of the display forming a third group (GB3), and the second column driver (2b) for the pixels of the rows in the second part of the display control a column conductor ($c_{1,3}, ...c_{m,3}$) per pixel column.

**5.** Display according to claim 3, where the n rows selected in parallel further comprise two successive rows in the second part of the display, and the rows in said second part are distributed into two groups such that two successive rows belong the one to a third group, the other to a fourth group, sharing the same connection line of the grids of the pixels that form the row selection line for said two successive rows, and the second column driver (2b) that controls the pixels of the rows in the second part of the display controls two column conductors per pixel column, one column conductor per group.

**6.** Display according to claim 5, wherein the two column conductors controlled by the second driver in the second part of the display are arranged in the extension of the two column conductors controlled by the first column driver in the first part.

FIG.1

FIG.2

# FIG.3

EP 1 913 573 B1

FIG.4

## FIG.5

FIG.6a

FIG.6b

EP 1 913 573 B1

# FIG.7

Data-R  Data-G  Data-R

$c_{1,3}$  $c_{1,2}$  $c_{1,1}$  $j_1$

GB1  (LED-R)

$j_2$

GB2  (LED-G)

GB3  (LED-B)

$j_3$

$COL_1$  $COL_2$

$c_{1,3}$  $c_{1,2}$  $c_{1,1}$  $j_1$

GB1

$j_2$

GB2

$j_3$

GB3

$COL_1$  $COL_2$

## FIG.8a

$c_{1,2}$  $c_{1,1}$  $c_{1,3}$  $j_2$  $j_1$  $j_3$

3 lignes
successives

$c_{2,2}$  $c_{2,1}$  $c_{2,3}$

$COL_1$  $COL_2$

## FIG.8b

# FIG.9a

# FIG.9b

**EP 1 913 573 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6448951 B